# FASCICULE DE BREVET EUROPEEN

(11) **EP 3 166 175 B1**
(45) Date de publication et mention de la délivrance du brevet: **18.04.2018**
(21) Numéro de dépôt: 16196445.7
(22) Date de dépôt: 28.10.2016
(51) Int. Cl.: H01M 10/48

(54) **BATTERIE ÉLECTRIQUE COMPORTANT UN SYSTÈME D'HOMOGÉNÉISATION DE SA TEMPÉRATURE INTERNE**
ELEKTRISCHE BATTERIE, DIE EIN SYSTEM FÜR DIE HOMOGENISIERUNG DER INNENTEMPERATUR AUFWEIST
ELECTRIC BATTERY HAVING A SYSTEM FOR THE HOMOGENISATION OF THE INTERNAL TEMPERATURE

(30) Priorité: 04.11.2015 FR 1560543
(43) Date de publication de la demande: 10.05.2017
(73) Titulaire: COMMISSARIAT À L'ÉNERGIE ATOMIQUE ET AUX ÉNERGIES ALTERNATIVES, 75015 Paris (FR)
(72) Inventeur: Chatroux, Daniel, 38470 Teche (FR); Dauchy, Julien, 73000 Chambery (FR); De Paoli, Lionel, 69460 Odenas (FR)
(74) Mandataire: Thibon, Laurent

(56) Documents cités:
- WO-A1-2014/158857
- WO-A1-2015/035406
- JP-A- 2006 331 956
- US-A1- 2010 099 015
- US-A1- 2010 178 554
- US-A1- 2012 183 830

## Description

### Domaine

La présente demande concerne le domaine des batteries électriques, et vise plus particulièrement une batterie électrique comportant un système d'homogénéisation de sa température interne.

### Exposé de l'art antérieur

Une batterie électrique comprend classiquement une pluralité de cellules élémentaires de stockage d'énergie électrique rechargeables connectées en série et/ou en parallèle entre une borne positive et une borne négative de fourniture de tension de la batterie. Les cellules sont généralement disposées dans un boîtier de protection laissant accessible la borne positive et la borne négative de la batterie.

Les cellules élémentaires sont classiquement des piles ou accumulateurs électrochimiques. Les cellules ont généralement tendance à s'échauffer naturellement lors des phases de recharge et de décharge de la batterie. Les cellules doivent toutefois, sous peine de se dégrader, être maintenues dans des plages de température spécifiques dépendant notamment de leur mode de fonctionnement (recharge, décharge, repos, etc.) et du type de cellule considéré. Au-dessus d'une certaine température, des réactions chimiques exothermiques s'amorcent à l'intérieur de la cellule. La cellule n'est alors plus capable d'évacuer suffisamment rapidement la chaleur qu'elle produit, ce qui entraine une augmentation de sa température interne et conduit à augmenter encore la quantité de chaleur générée à l'intérieur de la cellule. On dit que la cellule part en emballement thermique, ce qui peut très rapidement provoquer sa destruction et causer de graves dommages à la batterie.

Pour limiter les risques d'emballement thermique, diverses solutions ont été proposées. On a notamment proposé d'espacer les cellules les unes des autres à l'intérieur du boîtier de protection de façon à permettre une meilleure évacuation de la chaleur générée par les cellules. Cet espacement est aussi classiquement utilisé pour limiter l'échauffement des cellules situées au voisinage d'une cellule qui part en emballement thermique pour éviter la propagation du défaut de proche en proche. On a en outre proposé d'inclure dans le boîtier un dispositif de ventilation, généralement en circuit ouvert, pour mieux évacuer la chaleur générée par les cellules. On a par ailleurs proposé d'inclure dans le boîtier un circuit de refroidissement adapté à faire circuler un liquide caloporteur à proximité des cellules, par exemple de l'eau ou de l'huile, le liquide étant refroidi à l'extérieur du boîtier dans un échangeur thermique couplé à une source froide.

Les systèmes existants présentent toutefois divers inconvénients. En particulier, un inconvénient est que leur capacité à évacuer la chaleur générée par une cellule reste relativement limitée. Ainsi, les systèmes existants permettent de maintenir les cellules dans leur plage de température spécifiée par le constructeur, ce qui permet de prévenir les risques d'emballement thermique lorsque la batterie fonctionne dans des conditions normales, mais ils ne permettent pas de stopper un emballement thermique d'une cellule provoqué par exemple par une défaillance telle qu'une mise en court-circuit ou une surcharge de la cellule. Pour pouvoir stopper un emballement thermique, les systèmes existants devraient être surdimensionnés, ce qui poserait notamment des problèmes d'encombrement, de poids, de consommation électrique, etc.

### Résumé

Ainsi, un mode de réalisation prévoit une batterie électrique comportant :
une pluralité de cellules de stockage d'énergie électrique comportant chacune une borne positive et une borne négative, les cellules étant disposées dans un boîtier contenant un liquide diélectrique ;
des moyens de régulation thermique adaptés, en fonctionnement normal, à maintenir le liquide diélectrique dans une plage de températures prédéterminée ;
à l'intérieur du boîtier, une pluralité de dispositifs de brassage commandables individuellement pour faire circuler le liquide diélectrique au contact des bornes positives et négatives des cellules ; et
un dispositif de gestion adapté à détecter une éventuelle défaillance d'une cellule et, lorsqu'une défaillance d'une cellule est détectée, à commander les dispositifs de brassage pour modifier localement la puissance de brassage du liquide diélectrique dans le boîtier.

Selon un mode de réalisation, le dispositif de gestion est adapté, lorsqu'il détecte une défaillance d'une cellule, à commander une augmentation de la puissance de fonctionnement d'un dispositif de brassage associé à la cellule défaillante, sans augmenter la puissance de fonctionnement des autres dispositifs de brassage.

Selon un mode de réalisation, les cellules sont entièrement immergées dans le liquide diélectrique.

Selon un mode de réalisation, chaque dispositif de brassage comprend une hélice immergée dans le liquide diélectrique, couplée à un moteur d'entraînement.

Selon un mode de réalisation, les cellules ne sont pas entièrement immergées dans le liquide diélectrique.

Selon un mode de réalisation, chaque dispositif de brassage est adapté à aspirer le liquide diélectrique dans une partie inférieure du boîtier, et à pulvériser le liquide aspiré sur les cellules.

Selon un mode de réalisation, les dispositifs de brassage ne sont pas couplés à un échangeur thermique externe au boîtier.

Selon un mode de réalisation, la batterie comporte en outre un circuit de refroidissement comportant un échangeur thermique situé à l'extérieur du boîtier.

Selon un mode de réalisation, le circuit de refroidissement comprend une pompe distincte des dispositifs de brassage adaptée à faire circuler le liquide diélectrique dans l'échangeur thermique.

Selon un mode de réalisation, le liquide diélectrique est une huile diélectrique ou un ester diélectrique.

Selon un mode de réalisation, la batterie comporte en outre un dispositif de maintien de la pression interne du boîtier à une valeur sensiblement égale à la pression extérieure.

Selon un mode de réalisation, la batterie comporte en outre un dispositif commandable de chauffage du liquide diélectrique (105).

### Brève description des dessins

Ces caractéristiques et leurs avantages, ainsi que d'autres, seront exposés en détail dans la description suivante de modes de réalisation particuliers faite à titre non limitatif en relation avec les figures jointes parmi lesquelles :
la figure 1 est une vue en coupe schématique d'un exemple d d'une batterie électrique ;
la figure 2 est une vue en coupe schématique d'une variante de la batterie de la figure 1 ;
la figure 3 est une vue en coupe schématique d'un exemple d'un mode de réalisation d'une batterie électrique ;
les figures 4 et 5 sont des vues en coupe simplifiées illustrant d'autres variantes de réalisation des batteries des figures 1, 2 et 3 ; et
la figure 6 est une vue en coupe schématique d'un autre exemple d'une batterie électrique.

### Description détaillée

De mêmes éléments ont été désignés par de mêmes références aux différentes figures et, de plus, les diverses figures ne sont pas tracées à l'échelle. Par souci de clarté, seuls les éléments qui sont utiles à la compréhension des modes de réalisation décrits ont été représentés et sont détaillés. En particulier, les schémas d'interconnexion des cellules élémentaires d'une batterie n'ont pas été détaillés, les modes de réalisation décrits étant compatibles avec tous ou la plupart des schémas d'interconnexion usuels des cellules d'une batterie. Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures ou à une batterie dans une position normale d'utilisation. Sauf précision contraire, les expressions "approximativement", "sensiblement", et "de l'ordre de" signifient à 10 % près, de préférence à 5 % près.

Une cellule élémentaire d'une batterie électrique comporte typiquement une électrode positive et une électrode négative séparées par un électrolyte. L'électrode positive est reliée électriquement et mécaniquement à une borne de connexion positive de la cellule et l'électrode négative est reliée électriquement et mécaniquement à une borne de connexion négative de la cellule. La cellule présente par exemple une forme générale cylindrique ou parallélépipédique. Les bornes de connexion positive et négative de la cellule peuvent être disposées sur des faces opposées de la cellule, ou sur une même face de la cellule. En pratique, on observe que, en fonctionnement, les bornes de connexion d'une cellule présentent une température légèrement plus élevée que le reste de la cellule. Ceci est notamment dû au fait que les électrodes positive et négative conduisent généralement mieux la chaleur que le reste de la cellule. Ainsi, la chaleur générée à l'intérieur de la cellule est guidée de façon privilégiée vers les bornes de connexion par les électrodes positive et négative de la cellule.

Dans les batteries existantes comportant des systèmes de refroidissement utilisant un liquide caloporteur tel que de l'eau ou de l'huile, les bornes de connexion des cellules ne sont pas directement en contact avec le liquide de refroidissement, ce qui limite la capacité du système à évacuer la chaleur générée dans les cellules. Dans le cas d'un liquide caloporteur électriquement conducteur tel que l'eau, le liquide est même totalement isolé des cellules par des parois étanches et au moins une isolation électrique, ce qui, là encore, restreint la capacité du système à évacuer la chaleur générée dans les cellules.

Un autre inconvénient des systèmes existants est qu'après avoir circulé à proximité des cellules à l'intérieur du boîtier de protection, le liquide de refroidissement est amené dans un échangeur thermique situé à l'extérieur du boîtier. Il en résulte des pertes de charge relativement élevées, et par conséquent une vitesse de déplacement du liquide de refroidissement relativement faible à l'intérieur du boîtier. Là encore, ceci limite la capacité du système à évacuer la chaleur générée dans les cellules.

Dans les batteries comportant des systèmes de refroidissement à air, les bornes de connexion des cellules peuvent être directement en contact avec l'air circulant dans le système de refroidissement. En outre, la vitesse de circulation de l'air au contact des cellules peut être relativement élevée. Toutefois, le coefficient de transfert thermique entre les cellules et l'air étant relativement faible, la capacité du système à évacuer la chaleur générée dans les cellules reste limitée.

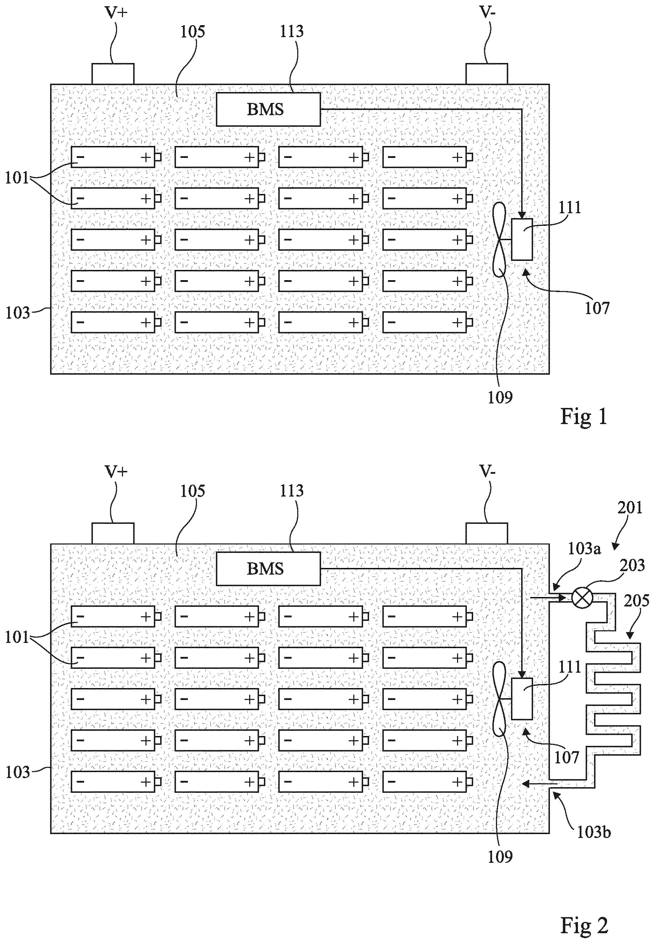

La figure 1 est une vue en coupe illustrant de façon schématique un exemple (non revendiqué) d'une batterie électrique.

La batterie de la figure 1 comprend une pluralité de cellules élémentaires de stockage d'énergie électrique rechargeables 101. Chaque cellule comporte une borne de connexion positive (+) et une borne de connexion négative (-). Les cellules 101 sont reliées en série et/ou en parallèle entre une borne positive V+ et une borne négative V- de la batterie. Par souci de simplification, les éléments d'interconnexion entre les cellules 101 de la batterie n'ont pas été représentés. Chaque cellule 101 a par exemple une forme générale parallélépipédique ou cylindrique. Plus généralement, les cellules 101 peuvent avoir toute autre forme. Les cellules 101 sont disposées à l'intérieur d'un boîtier de protection 103 de la batterie, par exemple de forme générale parallélépipédique, laissant accessible la borne positive V+ et la borne négative V- de la batterie.

Dans l'exemple de la figure 1 le boîtier 103 est rempli d'un liquide diélectrique 105, par exemple une huile diélectrique ou un ester diélectrique, de façon que chaque cellule 101 de la batterie soit entièrement plongée dans le liquide 105. En particulier, dans l'exemple de la figure 1, les bornes positives et négatives des cellules 101 sont immergées dans le liquide 105. On notera que le fait que le liquide 105 soit diélectrique permet d'immerger les bornes positives et négatives des cellules 101 sans risquer de créer des courts-circuits à l'intérieur de la batterie. Par diélectrique, on entend ici que le liquide 105 présente une conductivité électrique à 300 K inférieure à 10⁻⁴ S/m. De préférence, la disposition des cellules 101 à l'intérieur du boîtier 103 est telle que des espaces libres communiquant les uns avec les autres soient situés entre des cellules voisines de la batterie. La distance entre des cellules 101 voisines de la batterie peut toutefois être très faible, par exemple inférieure au dixième de la largeur d'une cellule. Dans le cas de cellules cylindriques à section circulaire, les cellules peuvent par exemple être disposées en quinconce selon plusieurs couches, de façon que les cellules voisines d'une même couche se touchent, et que les cellules voisines de couches voisines se touchent. Le contact entre les cellules permet alors de coller les cellules placées en quinconce entre elles au niveau des tangentes formant les zones de contacts. Cette configuration permet de minimiser le volume et la masse de l'assemblage mécanique des cellules.

La batterie de la figure 1 comprend en outre, à l'intérieur du boîtier 103, immergé dans le liquide 105, un dispositif de brassage commandable 107 adapté à agiter le liquide 105 à l'intérieur du boîtier 103 de façon à homogénéiser sa température. Dans l'exemple représenté, le dispositif 107 comprend une hélice 109 plongée dans le liquide 105, entrainée par un moteur 111. Lorsque l'hélice 109 est en mouvement, elle génère à l'intérieur du boîtier 103 une circulation du liquide 105 en contact avec les cellules 101. Il en résulte que la chaleur générée localement par chaque cellule est rapidement évacuée de la cellule et distribuée dans l'ensemble de la batterie. A titre de variante, le dispositif de brassage 107 peut comporter une pompe de circulation immergée dans le liquide 105, adaptée à brasser le liquide 105 à l'intérieur du boîtier 103. Le dispositif de brassage 107 est par exemple alimenté électriquement par une ou plusieurs cellules 101 de la batterie. De préférence, le dispositif de brassage 107 est relié à plusieurs sources d'alimentation tirant leur énergie de cellules distinctes de la batterie, de façon à pouvoir continuer à fonctionner en cas de défaillance d'une ou plusieurs cellules.

La batterie de la figure 1 comprend en outre un dispositif électronique de gestion 113 (BMS) adapté à détecter une éventuelle défaillance ou anomalie de fonctionnement susceptible de provoquer un emballement thermique d'une ou plusieurs cellules de la batterie, ou de résulter d'un emballement thermique d'une ou plusieurs cellules de la batterie. Pour cela, le dispositif de gestion 113 est par exemple adapté à mesurer la tension aux bornes de chacune des cellules de la batterie, et/ou à mesurer le courant circulant dans chacune des cellules de la batterie, et/ou à mesurer la température d'une ou plusieurs régions de la batterie, par exemple la température de chacune des cellules de la batterie, et/ou à mesurer la pression interne de chacune des cellules de la batterie. Le dispositif de gestion 113 peut en outre comporter un circuit de traitement, par exemple un microcontrôleur, adapté à interpréter les valeurs fournies par ses différents capteurs. La réalisation du dispositif de gestion 113 ne sera pas détaillée ci-après dans la mesure où les modes de réalisation décrits sont compatibles avec les architectures et modes de fonctionnement usuels des dispositifs électroniques de gestion de batterie. Le dispositif de gestion 113 peut être totalement ou partiellement immergé dans le liquide diélectrique 105 contenu dans le boîtier 103. Le dispositif de gestion 113 est en outre adapté à commander le dispositif de brassage 107.

En fonctionnement normal, le dispositif de brassage 107 peut être éteint. A titre de variante, le dispositif 107 peut être commandé pour réaliser un léger brassage du liquide 105. Par exemple, le dispositif 107 peut être commandé pour faire tourner l'hélice 109 à une vitesse relativement faible. Un tel brassage léger permet notamment d'homogénéiser la température du liquide 105 pendant les phases de fonctionnement normal de la batterie, et ainsi de faciliter la détection d'une éventuelle élévation anormale de la température d'une cellule, dans le cas où le dispositif de gestion 103 ne comporte qu'un nombre limité de capteurs de température, par exemple un nombre inférieur au nombre de cellules 101 de la batterie.

Le dispositif de gestion 113 est de plus configuré pour, lorsqu'il détecte un emballement thermique ou un risque d'emballement thermique d'une ou plusieurs cellules 101 de la batterie, commander le dispositif 107 pour augmenter (par rapport au mode de fonctionnement normal) la vitesse de brassage du liquide 105 à l'intérieur du boîtier. Par exemple, le dispositif 113 peut être configuré pour commander une augmentation de la vitesse de rotation de l'hélice 109 du dispositif de brassage 107 lorsqu'il détecte une anomalie de fonctionnement. A titre d'exemple, le dispositif de brassage 107 est commandé pour fonctionner à moins de 10 pourcent de sa puissance maximale en fonctionnement normal, et pour fonctionner à une puissance comprise entre 80 et 100 pourcent de sa puissance maximale en cas d'anomalie. A titre d'exemple illustratif, une défaillance d'une cellule peut classiquement entraîner la libération par la cellule, dans un intervalle de temps donné, d'une quantité d'énergie thermique cinq à dix fois supérieure à la quantité d'énergie thermique normalement libérée par la cellule dans un intervalle de temps identique en l'absence de défaillance. Ainsi, en augmentant la puissance de brassage du fluide d'un facteur supérieur ou égal à 5 et de préférence supérieur ou égal à 10 en cas d'anomalie, un emballement thermique de la cellule défaillante peut être évité ou stoppé.

Du fait que le dispositif de brassage 107 est situé à l'intérieur du boîtier 103 et que le dispositif 107 n'a pas pour charge d'entrainer le liquide 105 dans un échangeur thermique situé à l'extérieur du boîtier 103 confinant le liquide 105, un brassage particulièrement rapide du liquide 105 peut être mis en oeuvre par le dispositif 107 en cas d'anomalie. A titre d'exemple, en cas d'anomalie, la vitesse de circulation du liquide 105 au contact des cellules 101 est supérieure à 0,5 m/s. De plus, lors du brassage, le liquide 105 circule au contact direct des cellules 101, et notamment des bornes de connexion des cellules 101, qui sont généralement les parties les plus chaudes des cellules. En outre, le liquide 105 présente un coefficient d'échange thermique avec les cellules 101 relativement élevé, et notamment plus élevé que celui de l'air. A titre d'exemple, la conductivité thermique du liquide 105 est au moins trois fois supérieure à la conductivité thermique de l'air. Pour ces raisons, le brassage mis en oeuvre lorsqu'une anomalie est détectée permet d'évacuer très rapidement la chaleur générée par la cellule en défaut, et de répartir cette chaleur dans tout le liquide 105, ainsi que dans les cellules 101 non défaillantes de la batterie. En particulier, le brassage réalisé par le dispositif 107 permet de stopper un éventuel emballement thermique d'une cellule, en maintenant ou en ramenant rapidement la température de cette cellule en dessous du point d'emballement thermique, au prix d'un léger réchauffement des autres cellules de la batterie. A titre d'exemple, suite à la détection d'une anomalie, le dispositif de gestion 113 peut commander le maintien du brassage rapide du liquide 105 pendant une durée minimale prédéfinie, par exemple comprise entre 10 mn et 1 h, et/ou jusqu'à détecter un retour de l'ensemble des cellules 101 de la batterie dans des conditions normales de fonctionnement.

Outre le fait qu'elle est adaptée à stopper un emballement thermique lié à une défaillance interne telle qu'une mise en court-circuit ou une surcharge d'une de ses cellules, la batterie de la figure 1 a pour avantage que, du fait que ses cellules 101 sont entièrement plongées dans le liquide 105, ces dernières ne sont pas au contact de l'oxygène de l'air. Ceci limite les risques de corrosion des cellules et des interconnexions entre les cellules, et prolonge ainsi la durée de vie de la batterie. De plus, ceci limite les réactions chimiques indésirables et les risques de départ de feu à l'intérieur de la batterie en cas de défaillance.

On notera que le système comprenant le liquide diélectrique 105 et le dispositif de brassage 107 n'est pas un système de refroidissement à proprement parler, dans la mesure où le dispositif 107 n'entraine pas le liquide 105 dans un échangeur thermique situé à l'extérieur du boîtier en vue de refroidir ce liquide. Ainsi, dans l'exemple de la figure 1, la chaleur produite par les cellules 101 de la batterie est répartie dans l'ensemble des éléments contenus dans le boîtier 103, mais n'est pas évacuée activement à l'extérieur du boîtier. Ceci est toutefois parfaitement tolérable pour de nombreuses applications. En effet, de nombreuses batteries ne comportent pas de système de refroidissement actif et sont capables, du fait de leur inertie thermique relativement élevée, d'emmagasiner la chaleur qu'elles produisent pendant de nombreuses heures sans sortir des plages de température tolérées. L'évacuation naturelle (passive) de la chaleur par les parois du boîtier 103 suffit alors au refroidissement de la batterie. A titre de variante, la batterie de la figure 1 peut en outre comporter un système de refroidissement actif, comme l'illustre la figure 2 décrite ci-après.

La figure 2 est une vue en coupe schématique d'une variante (non revendiquée) de la batterie de la figure 1. La batterie de la figure 2 comprend les mêmes éléments que la batterie de la figure 1, agencés sensiblement de la même manière.

La batterie de la figure 2 diffère de la batterie de la figure 1 essentiellement en ce qu'elle comporte en outre, à l'extérieur du boîtier 103, un circuit 201 de refroidissement du liquide diélectrique 105 contenu dans le boîtier 103. Le circuit de refroidissement 201 est relié à l'intérieur du boitier 103 par une première ouverture 103a formée dans le boîtier 103, définissant l'entrée du circuit de refroidissement 201, et par une deuxième ouverture 103b formée dans le boîtier 103, distante de l'ouverture 103a, définissant la sortie du circuit de refroidissement. Le circuit de refroidissement 201 comporte une pompe 203 ainsi qu'un échangeur thermique 205 couplé à une source froide (non représentée). En fonctionnement, la pompe 203 (distincte du dispositif de brassage 107) aspire le liquide 105 contenu dans le boîtier 103 via l'ouverture 103a, force la circulation du liquide aspiré à travers l'échangeur thermique 205, puis réinjecte le liquide 105 refroidi dans le boîtier 103 par l'ouverture 103b.

Ainsi, dans les exemples des figures 1 et 2, la batterie comprend un système de gestion thermique comportant deux composantes distinctes.

La première composante comprend des moyens de régulation permettant, en fonctionnement normal, de maintenir la température interne de la batterie dans une plage nominale de températures de fonctionnement prédéterminée, par exemple entre des valeurs de seuil basse et haute. Ces moyens de régulation peuvent être passifs ou actifs. Des moyens de régulation passifs sont par exemple constitués uniquement par les parois du boîtier qui définissent une surface d'échange d'énergie thermique entre l'intérieur et l'extérieur du boîtier. Des moyens de régulation actifs peuvent comprendre le circuit de refroidissement 201 de la figure 2, et/ou le dispositif de brassage 107 et un dispositif adapté à commander le dispositif 107 pour mettre en oeuvre un brassage léger du liquide 105.

La deuxième composante du système de gestion thermique comprend des moyens de brassage rapide du liquide 105, comprenant par exemple le dispositif de brassage 107 et un dispositif adapté à commander le dispositif 107 pour mettre en oeuvre un brassage rapide du liquide 105, de façon à permettre de répartir rapidement l'énergie thermique produite par une cellule défaillante entre cette cellule et ses voisines. Les moyens de brassage rapide sont activés uniquement lorsqu'une anomalie de fonctionnement est détectée, les moyens de régulation étant quant à eux toujours en fonctionnement lorsque la batterie est utilisée.

Un avantage d'un tel système de gestion thermique est qu'il peut être mis en oeuvre en utilisant des moyens de régulation thermique simples, peu onéreux, peu encombrants, et à faible consommation électrique, la sécurité de la batterie étant assurée par les moyens de brassage rapide.

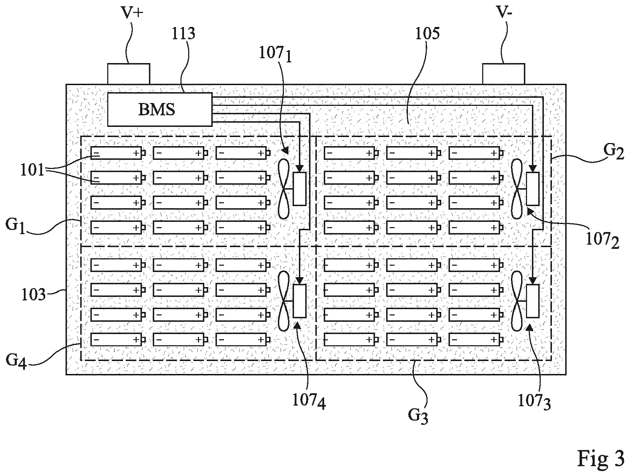

La figure 3 est une vue en coupe schématique d'un exemple d'un mode de réalisation d'une batterie électrique. La batterie de la figure 3 diffère de la batterie de la figure 1 essentiellement en ce qu'elle comporte non plus un seul mais n dispositifs de brassage 107ᵢ distincts répartis dans le boîtier 103, avec n entier supérieur à 1 et i entier allant de 1 à n (n=4 dans l'exemple représenté). Les dispositifs de brassage 107ᵢ de la figure 3 sont par exemple identiques ou similaires au dispositif de brassage 107 décrit ci-dessus. Les dispositifs de brassage 107ᵢ sont commandables individuellement par le dispositif de gestion 113 pour modifier localement la puissance ou vitesse de brassage du liquide diélectrique (105).

A chaque dispositif de brassage 107ᵢ est associé un groupe Gᵢ de cellules 101 voisines du dispositif de brassage 107ᵢ. A titre d'exemple, les cellules 101 sont réparties en n groupes Gᵢ distincts associés respectivement aux n dispositifs de brassage 107ᵢ.

Le fonctionnement du système de gestion thermique de la figure 3 est le suivant. Lorsque le dispositif de gestion 113 détecte qu'une cellule est défaillante, il commande le dispositif de brassage 107ᵢ associé au groupe de cellules Gᵢ auquel appartient la cellule pour mettre en oeuvre un brassage rapide du liquide 105 au voisinage de ce groupe de cellules. Les autres dispositifs de brassage 107ᵢ peuvent quant à eux rester éteints ou continuer de mettre en oeuvre un brassage léger du liquide 105. Autrement dit, le dispositif de gestion (113) est adapté, lorsqu'il détecte une défaillance d'une cellule, à commander une augmentation de la puissance de fonctionnement du dispositif de brassage 107ᵢ associé à la cellule défaillante, sans nécessairement augmenter la puissance de fonctionnement des autres dispositifs de brassage 107ᵢ.

Un avantage du mode de réalisation de la figure 3 est qu'il permet, lorsqu'une anomalie de fonctionnement est détectée, d'homogénéiser au plus vite la température du liquide 105 dans le voisinage immédiat de la cellule défaillante.

A titre de variante, chaque cellule peut être associée à plusieurs dispositifs de brassage 107ᵢ, l'ensemble des dispositifs de brassage associés à la cellule étant alors activés lorsque la cellule est jugée défaillante.

Bien entendu, la disposition des dispositifs de brassage 107ᵢ dans la batterie peut être différente de ce qui a été représenté en figure 3. A titre d'exemple, les cellules 101 sont réparties en matrice selon des rangées et des colonnes, et la batterie comprend un dispositif de brassage 107ᵢ entre chaque ligne ou entre chaque colonne de cellules de la batterie.

On notera que la variante de la figure 2 peut être combinée avec le mode de réalisation de la figure 3.

Dans les batteries des figures 1, 2 et 3, selon la nature du liquide diélectrique 105 choisi, ce dernier peut présenter un coefficient de dilatation thermique plus ou moins important.

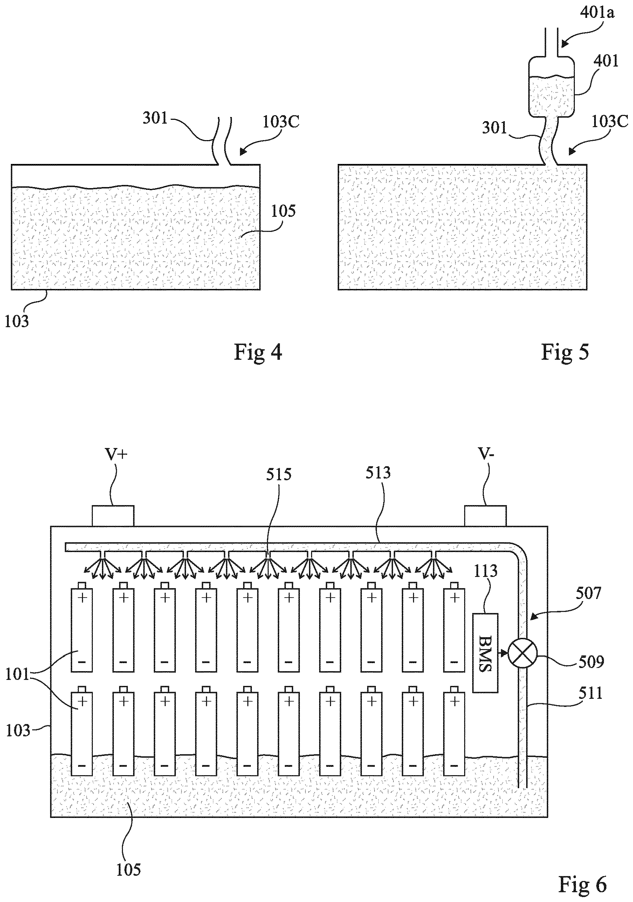

La figure 4 représente de façon très schématique un exemple d'une batterie du type décrit en relation avec les figures 1, 2 et 3. Par souci de simplification, seul le boîtier 103 et le liquide diélectrique 105 ont été représentés sur la figure 4. Comme l'illustre la figure 4, le boîtier 103 peut comporter, sur sa face supérieure (lorsque la batterie est dans une position normale de fonctionnement), une ouverture 103c reliée à l'atmosphère extérieure par un conduit 301, permettant que la pression à l'intérieur du boîtier soit toujours sensiblement égale à la pression atmosphérique. Ceci permet notamment d'équilibrer les contraintes liées à la dilatation/rétractation de l'huile et à l'évolution du volume du boîtier lors des phases d'échauffement et de refroidissement de la batterie. Dans l'exemple de la figure 4, le boîtier 103 n'est pas totalement rempli par le liquide diélectrique 105. Une partie supérieure du boîtier 103 est laissée libre de liquide 105 pour pouvoir absorber les dilatations du liquide 105 lors des phases d'échauffement de la batterie, sans risque de débordement du liquide 105 à l'extérieur de la batterie via l'ouverture 103c et le conduit 301.

La figure 5 représente de façon très schématique un autre exemple d'une batterie du type décrit en relation avec les figures 1, 2 et 3. Par souci de simplification, seul le boîtier 103 et le liquide diélectrique 105 ont été représentés sur la figure 5. Comme dans l'exemple de la figure 4, le boîtier 103 comporte une ouverture 103c reliée à un conduit 301. Toutefois, dans l'exemple de la figure 5, le conduit 301 ne débouche pas à l'air libre, mais dans un réservoir 401 contenant une réserve du liquide 105. Dans cet exemple, le réservoir 401 de la batterie fait office de vase d'expansion. A titre d'exemple, le réservoir 401 est partiellement rempli par le liquide 105 et comporte, dans une partie supérieure, une ouverture de mise à l'air libre 401a permettant d'équilibrer la pression avec l'intérieur du réservoir. A titre de variante, le réservoir 401 comprend une première chambre remplie de liquide 105, dans laquelle débouche le conduit 301, et une deuxième chambre remplie d'air ou d'un autre gaz séparée de la première chambre par une membrane élastique. Dans l'exemple de la figure 5, le boîtier 103 peut être entièrement rempli par le liquide 105.

La figure 6 est une vue en coupe illustrant de façon schématique un autre exemple (non revendiqué) d'une batterie électrique.

La batterie de la figure 6 comprend de nombreux éléments et modes de fonctionnements communs avec les batteries décrites en relation avec les figures 1, 2, 3, 4 et 5. Ces éléments et modes de fonctionnement ne seront pas décrits à nouveau en détail ci-après. Dans la suite, seules les différences avec les batteries décrites précédemment seront mises en exergue.

La batterie de la figure 6 diffère des batteries décrites en relation avec les figures 1, 2, 3, 4 et 5 principalement par le fait que, dans l'exemple de la figure 6, en fonctionnement normal, les cellules élémentaires 101 de la batterie ne sont pas ou pas totalement immergées dans le liquide diélectrique 105. A titre d'exemple, seule une partie inférieure du boîtier 103 est remplie par le liquide diélectrique 105, par exemple sur une hauteur inférieure au tiers de la hauteur du boîtier 103.

Dans la batterie de la figure 6, le dispositif de brassage 107 décrit en relation avec la figure 1 est remplacé par un dispositif de brassage 507 adapté à pomper le liquide diélectrique 105 au fond du boîtier 103, et à projeter le liquide 105 prélevé au fond du boîtier sur l'ensemble des cellules 101 de la batterie, et notamment sur les bornes de connexion des cellules. Dans l'exemple représenté, le dispositif de brassage 507 comprend une pompe 509 dont une entrée est reliée à la réserve de liquide 105 située au fond du boîtier 103 par un conduit de prélèvement 511, et dont une sortie est reliée à un conduit de sortie 513 muni de buses d'aspersion 515. Dans l'exemple représenté, le conduit de sortie 513 est situé dans une partie supérieure du boîtier 103, au-dessus des cellules 101, les buses d'aspersion 515 étant tournées vers les cellules 101. D'autres dispositions du dispositif de brassage 507 peuvent bien entendu être prévues.

Lorsque le dispositif de brassage 507 est en fonctionnement, le liquide 105 prélevé au fond du boîtier 103 est pulvérisé sur les cellules 101 de la batterie, puis retombe par gravité dans la partie inférieure du boîtier 103 où il est à nouveau aspiré par la pompe 509. La circulation du liquide 105 ainsi obtenue permet une homogénéisation rapide de la température des cellules de la batterie.

Comme dans les exemples décrits précédemment, le dispositif de brassage 507 est commandable par le dispositif de gestion 113 de la batterie, et le dispositif de gestion 113 est adapté à commander une augmentation de la puissance du brassage lorsqu'une anomalie de fonctionnement susceptible de se traduire par un emballement thermique ou résulter d'un emballement thermique est détectée.

Un avantage de la batterie de la figure 6 par rapport aux batteries décrites en relation avec les figures 1, 2, 3, 4 et 5 est que la quantité de liquide 105 à l'intérieur de la batterie est réduite, ce qui permet de limiter le poids de la batterie.

On notera que de façon similaire à ce qui a été décrit en relation avec la figure 2, la batterie de la figure 6 peut en outre comporter, à l'extérieur du boîtier 103, un circuit de refroidissement du liquide diélectrique 105 contenu dans le boîtier 103.

Des modes de réalisation particuliers ont été décrits. Diverses variantes et modifications apparaîtront à l'homme de l'art. En particulier, les batteries décrites ci-dessus peuvent être équipées d'un dispositif commandable de chauffage du liquide diélectrique 105, par exemple au moyen d'une résistance chauffante. Un avantage est alors que le liquide 105 peut être utilisé pour maintenir la batterie en température lorsque la batterie est utilisée dans des environnements froids. Le dispositif de brassage 107 ou 507 peut notamment être actionné pendant le chauffage pour assurer un réchauffement homogène et rapide de la batterie.

## Revendications

1. Batterie électrique comportant :
une pluralité de cellules de stockage d'énergie électrique (101) comportant chacune une borne positive (+) et une borne négative (-), les cellules (101) étant disposées dans un boîtier (103) contenant un liquide diélectrique (105) ;
des moyens de régulation thermique adaptés, en fonctionnement normal, à maintenir le liquide diélectrique (105) dans une plage de températures prédéterminée ;
à l'intérieur du boîtier (103), une pluralité de dispositifs de brassage (107ᵢ) commandables individuellement pour faire circuler le liquide diélectrique (105) au contact des bornes positives (+) et négatives (-) des cellules (101) ; et
un dispositif de gestion (113) adapté à détecter une éventuelle défaillance d'une cellule (101) et, lorsqu'une défaillance d'une cellule est détectée, à commander les dispositifs de brassage (107ᵢ) pour modifier localement la puissance de brassage du liquide diélectrique (105) dans le boîtier (103).

2. Batterie selon la revendication 1, dans laquelle le dispositif de gestion (113) est adapté, lorsqu'il détecte une défaillance d'une cellule, à commander une augmentation de la puissance de fonctionnement d'un dispositif de brassage (107ᵢ) associé à la cellule défaillante, sans augmenter la puissance de fonctionnement des autres dispositifs de brassage (107ᵢ).

3. Batterie selon la revendication 1 ou 2, dans laquelle les cellules (101) sont entièrement immergées dans le liquide diélectrique (105).

4. Batterie selon la revendication 3, dans laquelle chaque dispositif de brassage (107ᵢ) comprend une hélice (109) immergée dans le liquide diélectrique (105), couplée à un moteur d'entrainement (111).

5. Batterie selon la revendication 1 ou 2, dans laquelle les cellules (101) ne sont pas entièrement immergées dans le liquide diélectrique (105).

6. Batterie selon la revendication 5, dans laquelle chaque dispositif de brassage est adapté à aspirer le liquide diélectrique (105) dans une partie inférieure du boîtier (103), et à pulvériser le liquide aspiré sur les cellules (101).

7. Batterie selon l'une quelconque des revendications 1 à 6, dans laquelle les dispositifs de brassage ne sont pas couplés à un échangeur thermique externe au boîtier (103).

8. Batterie selon l'une quelconque des revendications 1 à 7, comportant en outre un circuit de refroidissement (201) comportant un échangeur thermique (205) situé à l'extérieur du boîtier (103).

9. Batterie selon la revendication 8, dans laquelle le circuit de refroidissement (201) comprend une pompe (203) distincte des dispositifs de brassage (107ᵢ) adaptée à faire circuler le liquide diélectrique (105) dans l'échangeur thermique (205) .

10. Batterie selon l'une quelconque des revendications 1 à 9, dans laquelle le liquide diélectrique (105) est une huile diélectrique ou un ester diélectrique.

11. Batterie selon l'une quelconque des revendications 1 à 10, comportant en outre un dispositif (103c, 301 ; 401) de maintien de la pression interne du boîtier (103) à une valeur sensiblement égale à la pression extérieure.

12. Batterie selon l'une quelconque des revendications 1 à 11, comportant en outre un dispositif commandable de chauffage du liquide diélectrique (105).

## Patentansprüche

1. Eine elektrische Batterie, die Folgendes aufweist:
eine Vielzahl von Speicherzellen (101) für elektrische Energie, von denen jede einen positiven Anschluss (+) und einen negativen Anschluss (-) aufweist, wobei die Zellen (101) in einer Gehäuse bzw. einem Gehäuse (103) angeordnet sind, das eine dielektrische Flüssigkeit (105) enthält;
Wärmeregulationsmittel, die im normalen Betrieb geeignet sind, die dielektrische Flüssigkeit (105) in einem vorbestimmten Temperaturbereich zu halten;
innerhalb des Gehäuses (103) eine Vielzahl von individuell steuerbaren Rührvorrichtungen (107ᵢ) zum Zirkulieren der dielektrischen Flüssigkeit (105) in Kontakt mit den positiven (+) und negativen (-) Anschlüssen der Zellen (101); und
eine Verwaltungsvorrichtung (113), die geeignet ist, einen möglichen Fehler einer Zelle (101) zu detektieren, und wenn ein Zellfehler detektiert wird, die Rührvorrichtungen (107ᵢ) zu steuern, die Rührleistung, mit der die dielektrische Flüssigkeit (105) in dem Gehäuse (103) gerührt wird, lokal zu modifizieren.

2. Batterie nach Anspruch 1, wobei die Verwaltungsvorrichtung (113), wenn sie einen Fehler einer Zelle detektiert, geeignet ist, eine Erhöhung der Betriebsleistung einer mit der fehlerhaften Zelle assoziierten Rührvorrichtung (107ᵢ) zu veranlassen ohne die Betriebsleistung der anderen Rührvorrichtungen (107ᵢ) zu erhöhen.

3. Batterie nach Anspruch 1 oder 2, wobei die Zellen (101) vollständig in die dielektrische Flüssigkeit (105) eingetaucht sind.

4. Batterie nach Anspruch 3, wobei jede Rührvorrichtung (107ᵢ) einen in die dielektrische Flüssigkeit (105) eingetauchten Propeller (109) aufweist, der an einen Antriebsmotor (111) gekoppelt ist.

5. Batterie nach Anspruch 1 oder 2, wobei die Zellen (101) nicht vollständig in die dielektrische Flüssigkeit (105) eingetaucht sind.

6. Batterie nach Anspruch 5, wobei jede Rührvorrichtung geeignet ist, die dielektrische Flüssigkeit (105) in einen unteren Teil der Gehäuse (103) zu saugen, und die eingesaugte Flüssigkeit auf die Zellen (101) zu sprühen.

7. Batterie nach einem der Ansprüche 1 bis 6, wobei die Rührvorrichtungen nicht an einen Wärmetauscher außerhalb des Gehäuses (103) gekoppelt sind.

8. Batterie nach einem der Ansprüche 1 bis 7, die ferner einen Kühlkreislauf (201) aufweist, der einen Wärmetauscher (205) aufweist, der außerhalb des Gehäuses (103) angeordnet ist.

9. Batterie nach Anspruch 8, wobei der Kühlkreislauf (201) eine von den Rührvorrichtungen (107ᵢ) getrennte Pumpe (203) aufweist, die geeignet ist, die dielektrische Flüssigkeit (105) in dem Wärmetauscher (205) zu zirkulieren.

10. Batterie nach einem der Ansprüche 1 bis 9, wobei die dielektrische Flüssigkeit (105) ein dielektrisches Öl oder ein dielektrischer Ester ist.

11. Batterie nach einem der Ansprüche 1 bis 10, der ferner eine Vorrichtung (103c, 301; 401) aufweist, die den internen Druck des Gehäuses (103) auf einem Wert hält, der im Wesentlichen gleich zu dem Außendruck ist.

12. Batterie nach einem der Ansprüche 1 bis 11, die ferner eine steuerbare Vorrichtung zum Erwärmen der dielektrischen Flüssigkeit (105) aufweist.

## Claims

1. An electric battery comprising:
a plurality of electrical energy storage cells (101) each comprising a positive terminal (+) and a negative terminal (-), the cells (101) being arranged in a package (103) containing a dielectric liquid (105);
heat regulation means capable, in normal operation, of maintaining the dielectric liquid (105) within a predetermined temperature range;
within the package (103), a plurality of individually controllable stirring devices (107ᵢ) for circulating the dielectric liquid (105) in contact with the positive (+) and negative (-) terminals of the cells (101); and
a management device (113) capable of detecting a possible failure of a cell (101) and, when a cell failure is detected, of controlling the stirring devices (107ᵢ) to modify locally the power of the dielectric liquid (105) stirring in the package (103).

2. The battery of claim 1, wherein the management device (113) is capable, when it detects a failure of a cell, of causing an increase in the operating power of a stirring device (107ᵢ) associated with the faulty cell, without increasing the operating power of the other stirring devices (107ᵢ).

3. The battery of claim 1 or 2, wherein the cells (101) are totally immersed in the dielectric liquid (105).

4. The battery of claim 3, wherein each stirring device (107ᵢ) comprises a propeller (109) immersed in the dielectric liquid (105), coupled to a driving motor (111).

5. The battery of claim 1 or 2, wherein the cells (101) are not totally immersed in the dielectric liquid (105).

6. The battery of claim 5, wherein each stirring device is capable of sucking the dielectric liquid (105) into a lower portion of the package (103), and of spraying the sucked-in liquid onto the cells (101).

7. The battery of any of claims 1 to 6, wherein said stirring devices are not coupled to a heat exchanger external to the package (103).

8. The battery of any of claims 1 to 7, further comprising a cooling circuit (201) comprising a heat exchanger (205) located outside of the package (103).

9. The battery of claim 8, wherein the cooling circuit (201) comprises a pump (203) separate from the stirring devices (107ᵢ) capable of circulating the dielectric liquid (105) in the heat exchanger (205).

10. The battery of any of claims 1 to 9, wherein the dielectric liquid (105) is a dielectric oil or a dielectric ester.

11. The battery of any of claims 1 to 10, further comprising a device (103c, 301; 401) for maintaining the internal pressure of the package (103) at a value substantially equal to the outer pressure.

12. The battery of any of claims 1 to 11, further comprising a controllable device for heating the dielectric liquid (105).
